# EUROPÄISCHE PATENTSCHRIFT

(11) **EP 3 935 457 B1**
(45) Veröffentlichungstag und Bekanntmachung des Hinweises auf die Patenterteilung: **07.08.2024**
(21) Anmeldenummer: 20704835.6
(22) Anmeldetag: 10.02.2020
(51) Int. Cl.: G05B 19/418

(54) **VERFAHREN ZUR PRODUKTFÜHRUNG IN EINER ABFÜLLANLAGE UND ABFÜLLANLAGE FÜR GLASFLASCHEN**
METHOD FOR PRODUCT CONTROL IN A FILLING INSTALLATION AND FILLING INSTALLATION FOR GLASS BOTTLES
PROCÉDÉ DE GUIDAGE DE PRODUIT DANS UNE INSTALLATION DE MISE EN BOUTEILLES ET INSTALLATION DE MISE EN BOUTEILLES POUR BOUTEILLES DE VERRE

(30) Priorität: 06.03.2019 DE 102019203060
(43) Veröffentlichungstag der Anmeldung: 12.01.2022
(73) Patentinhaber: Krones AG, 93073 Neutraubling (DE)
(72) Erfinder: WILL, Christof, 93073 Neutraubling (DE)
(74) Vertreter: Grünecker Patent- und Rechtsanwälte PartG mbB
(86) Internationale Anmeldenummer: PCT/EP2020/053301
(87) Internationale Veröffentlichungsnummer: WO 2020/177983

(56) Entgegenhaltungen:
- DE-A1- 102011 017 448
- US-A1- 2006 149 407
- US-A1- 2017 315 540

## Beschreibung

Die Erfindung betrifft ein Verfahren zur Produktführung in einer Abfüllanlage und eine Abfüllanlage für Glasflaschen.

Leere Mehrwegflaschen aus Glas werden in der Regel nach ihren Spülen (Rinsen) hinsichtlich Sauberkeit, Unversehrtheit, Abnutzung und einem gegebenenfalls vorhandenen Restinhalt mit Lauge oder dergleichen Flüssigkeiten inspiziert, bevor sie einer Füllmaschine zur Abfüllung eines flüssigen Produkts zugeführt werden. Nicht ordnungsgemäße Leerflaschen werden bekanntermaßen vor der Füllmaschine ausgeleitet.

Trotz solcher Vorsichtsmaßnahmen kann es vereinzelt zum Flaschenbruch im Bereich der Füllmaschine kommen, gegebenenfalls auch in Behandlungsstufen davor und/oder danach. Nachteilig sind die dadurch verursachten Produktionsunterbrechungen und ein möglicher Eintrag von Glassplittern in voraus-/ nachlaufende Flaschen. Diese müssen dann sicherheitshalber ausgeleitet werden und schlagen als Produktverlust zu Buche.

Außerdem können prinzipiell Füllhöhen zu stark schwanken und/oder Undichtigkeiten beim Abfüllen des Produkts und/oder beim Verschließen der so hergestellten Vollflaschen auftreten. Diese werden daher stromabwärts der Verschließmaschine hinsichtlich Füllhöhe, Sitz des Verschlusses und gegebenenfalls auf Undichtigkeit inspiziert. Zwar können dann als fehlerhaft erkannte Vollflaschen zuverlässig ausgeleitet werden. Jedoch können bisher zu wenig Rückschlüsse gezogen werden, wie sich der jeweilige Zustand der Leerflaschen auf das Ergebnis der Abfüllung samt Verschließen auswirkt.

Es hat sich als besonders schwierig und zeitaufwendig erwiesen, erhobene Messdaten so auszuwerten, dass möglichst nur diejenigen Leerflaschen aus dem Produktstrom ausgeleitet werden, die mit großer Wahrscheinlichkeit zu einer fehlerhaften Vollflasche führen und/oder einen Maschinenfehlerzustand im Bereich der Füllmaschine und/oder einer nachgeschalteten Verschließmaschine verursachen. Insbesondere wäre es wünschenswert, möglichst viele der festgestellten Eigenschaften der Leerflaschen mit Ergebnisdaten der Vollflaschen und/oder aufgetreten Maschinenfehlern, wie beispielsweise Flaschenbruch, korrelieren zu können, um die Abfüllung des Produkts und die Produktion der Vollflaschen insgesamt für den laufenden Produktionsprozess qualitativ zu optimieren und Ausfallzeiten und/oder Produktionslücken im Produktionsstrom zu minimieren.

Zwar ist aus DE 10 2011 017 448 A1 ein Verfahren zur Störungsvermeidung in einer Vollflaschenbehandlungsanlage bekannt, bei dem für einzelne Anlagenbestandteile Referenzkennwerte und Prüfkennwerte festgelegt werden. Damit sollen Zusammenhänge zwischen Fehlerursachen und Fehlerzuständen mittels rechnergestützter künstlicher Intelligenz optimiert werden, beispielsweise mit einem neuronalen Netz. In diesem Zusammenhang sind auch automatische oder halbautomatische Einlernprozesse für die Behandlungsanlage prinzipiell bekannt.

Es wäre jedoch wünschenswert, nicht nur Fehlerzustände solcher Anlagen möglichst zu vermeiden, sondern die Produktqualität und die Maschinenauslastung insgesamt zu optimieren.

Wenigstens eine der gestellten Aufgaben wird mit einem Verfahren nach Anspruch 1 gelöst. Demnach dient dieses zur Produktführung in einer Abfüllanlage. Hierzu misst man automatisch Leergut-Parameter zum Abfüllen bereitgestellter Leerflaschen aus Glas. Ferner werden dabei Initialdaten zum Abfüllen eines flüssigen Produkts in die Leerflaschen gewonnen und abgespeichert. Ferner misst man Vollgut-Parameter beim Abfüllen aus den Leerflaschen hergestellter Vollflaschen, wobei man insbesondere auch beim Abfüllen auftretende Maschinenfehlerzustände automatisch feststellt, und speichert dabei jeweils gewonnene Ergebnisdaten des Abfüllens ab und ordnet diese den Leerflaschen individuell zu.

Ferner berechnet man wenigstens ein im Produktionsbetrieb nachfolgend geltendes Ausleitkriterium zur Entscheidung über ein Ausleiten fehlerhafter Leerflaschen oder Vollflaschen auf der Grundlage einer Datenanalyse der gespeicherten Initialdaten und Ergebnisdaten, wobei die Berechnung des Ausleitkriteriums unter Berücksichtigung im Produktionsbetrieb hinzugewonnener Initialdaten und Ergebnisdaten insbesondere automatisch aktualisiert wird.

Ausleitkriterien können folglich mit zunehmender Produktionsdauer zunehmend genauer berechnet werden, um die Leerflaschen oder Vollflaschen möglichst zielgerichtet auszuleiten, also beispielsweise an geeigneter Stelle im Produktionsablauf, um einerseits möglichst viele Ergebnisdaten zur Optimierung des Produktionsablaufs zu gewinnen andererseits Maschinenfehlerzustände möglichst zuverlässig zu vermeiden. Somit lassen sich auch Produktionsunterbrechungen minimieren.

Insbesondere ist ein im Produktionsbetrieb voranschreitender Maschinenlernprozess möglich, der auf der Grundlage von Rechenregeln automatisch abläuft und ferner optional von Bedienern gesteuert werden kann.

Vorzugsweise fließen die hinzugewonnenen Initialdaten und Ergebnisdaten in den Produktionsbetrieb durch manuelle und/oder automatische Aktualisierung der Steuerung ein.

Maschinenparameter, beispielsweise einer Spülstation (Rinsstation) zum Spülen der Leerflasche, einer Füllmaschine zum Herstellen der Vollflaschen aus den Leerflaschen und einem flüssigen Produkt, und/oder einer Verschließmaschine zum Verschließen der Vollflaschen können auf der Grundlage der hinzugewonnenen Initialdaten und Ergebnisdaten zur Optimierung der Produktqualität angepasst werden.

Dies dient einer laufenden Qualitätssicherung und/oder Qualitätsverbesserung hergestellter / gefüllter Vollflaschen. Vor allem lässt sich so der Ausschussanteil (scrap rate) an der Produktion reduzieren.

Bei der Ermittlung von Ausleitkriterien gibt man vorzugsweise der Qualitätsoptimierung der Produktion Vorrang vor einer möglichst umfassenden Erhebung von Initialdaten und/oder Ergebnisdaten. Das heißt, im Abwägungsfall leitet man eine zur Weiterverarbeitung ungeeignete Leerflasche möglichst so frühzeitig aus dem Produktstrom aus, wie es zur Erzielung einer bestimmten Produktqualität nötig ist oder prognostiziert werden kann.

Vorzugsweise wird das Ausleitkriterium derart automatisch verändert, dass eine mittels der Datenanalyse prognostizierte anteilige Häufigkeit zulässiger Werte der Vollgut-Parameter steigt und optional ferner eine prognostizierte anteilige Häufigkeit der Maschinenfehlerzustände sinkt. Dies ermöglicht einen sich laufend selbst verbessernden Optimierungsprozess. Somit kann die Produktqualität der verschlossenen Vollflaschen verbessert werden bei gleichzeitiger Minimierung von Produktionsausfallzeiten und/oder Produktlücken im Produktstrom. Unter der anteiligen Häufigkeit ist beispielsweise die Anzahl korrekt hergestellter und verschlossener Vollflaschen pro Anzahl überprüfter Leerflaschen, insbesondere unter der Voraussetzung gleichbleibender mittlerer Qualität der bereitgestellten Leerflaschen, zu verstehen.

Vorzugsweise umfasst die Datenanalyse ein Data-Mining, insbesondere eine Assoziationsanalyse und/oder eine Regressionsanalyse und/oder eine Datenklassifikation der Initialdaten und/oder Ergebnisdaten. Klassifikation, Regressionsanalyse und Assoziationsanalyse eignen sich insbesondere dazu, neu hinzugewonnene Initialdaten und Ergebnisdaten im Rahmen einer Prognose über die Auswirkung bestimmter Leergut-Parameter auf zu erzielende Vollgut-Parameter zu bewerten.

Derartige Analyseverfahren können im Rahmen von maschinellen Lernprozessen und einer Selbstoptimierung der Abfüllanlage im Sinne einer künstlichen Intelligenz oder dergleichen verwendet werden. Zudem lassen sich zusätzliche, gegebenenfalls zuvor unbekannte oder unterbewertete Korrelationen zwischen einzelnen Leergut-Parametern und/oder Vollgut-Parametern herstellen und/oder in die Datenanalyse einbeziehen.

Vorzugsweise löst ein Erfüllen des Ausleitkriteriums anhand der Initialdaten einer bestimmten Leerflasche einen der nachfolgenden Schritte aus: ein Ausleiten der zugeordneten Leerflasche vor einem dafür vorgesehenen Füllorgan einer Füllmaschine; ein Durchleiten der Leerflasche am Füllorgan ohne Abfüllen, jedoch mit Verschließen und Ausleiten der Leerflasche; oder ein Herstellen und Ausleiten einer verschlossenen Vollflasche.

Vorzugsweise werden die Leerflaschen dann umso weiter stromaufwärts ausgeleitet, je größer das Ausmaß einer festgestellten Abweichung von Initialdaten von zugeordneten Sollwerten ist. Zum einen können Maschinenfehlerzustände besonders zuverlässig vermieden werden, andererseits aber auch bestimmte Leerflaschen gegebenenfalls noch möglichst viele Inspektionsschritte und/oder Produktionsschritte durchlaufen, um damit gewonnene Initialdaten und Ergebnisdaten für die Datenanalyse zu verwenden. Auch solche Leerflaschen, in die das flüssige Produkt nicht ordnungsgemäß abgefüllt werden kann, dienen dann der Optimierung und dem automatischen Selbstlernprozess, beispielsweise durch automatisches Überprüfen oder Herstellen bestimmter Korrelationen von Leergut-Parametern und Vollgut-Parametern.

Vorzugsweise werden für die Leergut-Parameter Sollbereiche auf der Grundlage der Datenanalyse festgelegt, wobei Ausleitkriterien beispielsweise dann erfüllt sind, wenn Initialdaten einer geprüften Leerflasche von den jeweiligen Sollbereichen abweichen, in einem bestimmten Ausmaß abweichen und/oder für eine bestimmte Kombination von Leergut-Parametern abweichen. Dies ermöglicht eine vergleichsweise einfache Steuerung und Zuordnung einzelner Ausleitvorgänge an bestimmten Stellen des Produktionsstroms, beispielsweise durch dort jeweils geltende Ausleitkriterien, sowohl für die geprüften Leerflaschen als auch für gegebenenfalls daraus hergestellten Vollflaschen.

Vorzugsweise werden die Sollbereiche und/oder das Ausleitkriterium auf der Grundlage fortschreitender Anhäufung hinzugewonnener Initialdaten und Ergebnisdaten automatisch aktualisiert. Die Datenanalyse kann somit bei fortschreitender Produktion verfeinert und präzisiert werden. Hierbei ist es auch möglich, bestimmte Datensätze von Initialdaten und Ergebnisdaten außer Acht zu lassen oder zu löschen, beispielsweise veraltete Datensätze oder solche, die sich auf Parametersätze mit bei einem bei bestimmten Leerflaschen nicht anwendbaren Leergut- Parameter und/oder Ergebnisparameter beziehen.

Vorzugsweise berücksichtig man bei der Datenanalyse mehrere Parametersätze, die jeweils assoziierte Leergut-Parameter und Vollgut-Parameter umfassen. Dabei gehen Abweichungen gemessener Leergut-Parameter von ihren Sollbereichen mit einer geeigneten Gewichtung in die Festlegung von Ausleitkriterien ein. Hierbei werden die Abweichungen vorzugsweise auf der Grundlage der hinzugewonnenen Initialdaten und Ergebnisdaten dynamisch gewichtet.

Beispielsweise können Leergut-Parameter, bei denen sich Abweichungen von ihren zugeordneten Sollbereichen sich im Laufe der im Produktionsbetrieb fortschreitenden Datenanalyse als weniger kritisch herausgestellt haben, geringer gewichtet werden und umgekehrt.

Vorzugsweise geben die Leergut-Parameter wenigstens drei, insbesondere wenigstens fünf, der folgenden Eigenschaften und/oder Zustände der jeweiligen Leerflasche an: korrekter Flaschentyp, Ausmaß von Reibrändern, Verschmutzung und/oder Beschädigung der Seitenwand; Verschmutzung, Rostablagerungen und/oder Beschädigung seitlicher Mündungsbereiche und/oder von Verschlussgewinden; Verschmutzung und/oder Beschädigung von Dichtflächen; Verschmutzung und/oder Beschädigung von Bodenbereichen; und/oder Vorhandensein von Laugenresten oder anderweitiger Flüssigkeit im Inneren der Leerflasche.

Flaschentypen können beispielsweise durch Vermessen in Lichtschranken oder bildgebend erkannt werden. Auch Reibränder lassen sich bildgebend beurteilen. Seitenwände können durch mehrere Kameras und geeigneter Drehlagenpositionierung der Leerflaschen bildgebend hinsichtlich transparenter und intransparenter Verschmutzung sowie Bruchstellen beurteilt werden. Auf diese Weise lassen sich zudem Verschmutzungen und vertikale Risse an der Flaschenmündung sowie Beschädigungen und Rauigkeiten von Gewinden erkennen. Beschädigungen, Verschmutzungen und Überpressungen an Dichtflächen im Mündungsbereich können ebenso bildgebend erkannt werden wie Verschmutzungen, Beschädigungen und Glasscherben im Bereich des Flaschenbodens. Restflüssigkeiten können mittels Absorption von Infrarotstrahlung oder Hochfrequenzbestrahlung erkannt werden.

Vorzugsweise werden wenigstens einige der Leergut-Parameter bildgebend vor einem Einlaufbereich zu einer Füllmaschine erfasst, insbesondere nach einer Rins-/ Spülstation zum Spülen der Leerflaschen. Bildgebend erhält man aus vergleichsweise wenigen Messvorgängen mit der Datenanalyse umfassend und flexibel auswertbare Initialdaten, die so zudem möglichst weit stromaufwärts der Füllmaschine ermittelt werden, um gegebenenfalls auszuführende Ausleitvorgänge und gegebenenfalls auszuführenden Vollflascheninspektionen gezielt und rechtzeitig ausführen zu können.

Vorzugsweise geben die Vollgut-Parameter wenigstens zwei der folgenden Eigenschaften und/oder Zustände der Vollflaschen an: eine Füllhöhe des abgefüllten Produkts; Fehlen, Beschädigung oder fehlerhafter Sitz eines angebrachten Verschlusses; und Dichtigkeit des Verschlusses.

Die Füllhöhe lässt sich beispielsweise durch Messbrücken mittels Hochfrequenzstrahlen, Infrarotstrahlen, Gammastrahlen oder Röntgenstrahlen sowie bildgebend messen. Die Anwesenheit von Verschlüssen kann mittels Sensoren berührungslos überprüft werden. Bildgebend kann der Verschluss zudem auf korrekten Sitz, Durchmesser, Typ, Aufdruck, Unversehrtheit, Anwesenheit und korrekter Sitz von Sicherungsringen und dergleichen überprüft werden. en Vorzugsweise umfassen die Maschinenfehlerzustände: Flaschenbruch an dem zugeordneten Füllorgan; Flaschenbruch nach oder vor dem zugeordneten Füllorgan; unzureichende Evakuierung der Leerflasche am Füllorgan; und/oder Kraft / Drehmoment beim Anbringen des zugeordneten Verschlusses fehlerhaft.

Die inspizierten Leerflaschen können bis zur Füllmaschine / Verschließmaschine beispielsweise durch ein First-In-First-Out-Register, anhand eines aufgedruckten Codes oder dergleichen, und/oder bildgebend anhand individueller Merkmale, wie beispielsweise durch je nach individuellem Verschleiß unterschiedlich ausgebildete Reibringe, nachverfolgt werden.

Stromabwärts der Füllmaschine / Verschließmaschine basiert die Nachverfolgung der Vollflaschen vorzugsweise auf einem magnetischen Kodieren metallischer Verschlüsse, Kodierung mittels UV-Farbe, Balkenkodierung oder zweidimensionaler Kodierung.

Den so nachverfolgten Leerflaschen / Vollflaschen können die jeweils eingesetzten Behandlungsorgane, wie beispielsweise Füllorgane, einzeln zugeordnet werden. Dies kann in die aktualisierte Datenanalyse einbezogen werden.

Die gestellte Aufgabe wird ebenso mit einer Abfüllanlage für Glasflaschen gemäß Anspruch 14 gelöst. Demnach umfasst die Abfüllanlage eine Füllmaschine für Leerflaschen aus Glas, eine zugeordnete Verschließmaschine für daraus hergestellte Vollflaschen und ferner: wenigstens eine stromaufwärts der Füllmaschine angeordnete Ausleitvorrichtung für fehlerhafte Leerflaschen; wenigstens eine stromabwärts der Verschließmaschine angeordneten Ausleitvorrichtung für Vollflaschen und/oder verschlossene Leerflaschen; Inspektionseinheiten für die Leerflaschen und die Vollflaschen zum Erheben von Initialdaten und Ergebnisdaten mit dem Verfahren nach wenigstens einer der voranstehend beschriebenen Ausführungsformen; und eine Steuerung zum Auslösen der Ausleitvorrichtungen auf der Grundlage wenigstens eines mit dem Verfahren nach wenigstens einer der voranstehend beschriebenen Ausführungsformen berechneten Ausleitkriteriums. Damit lassen sich die bezüglich des Verfahrens beschriebenen Vorteile erzielen.

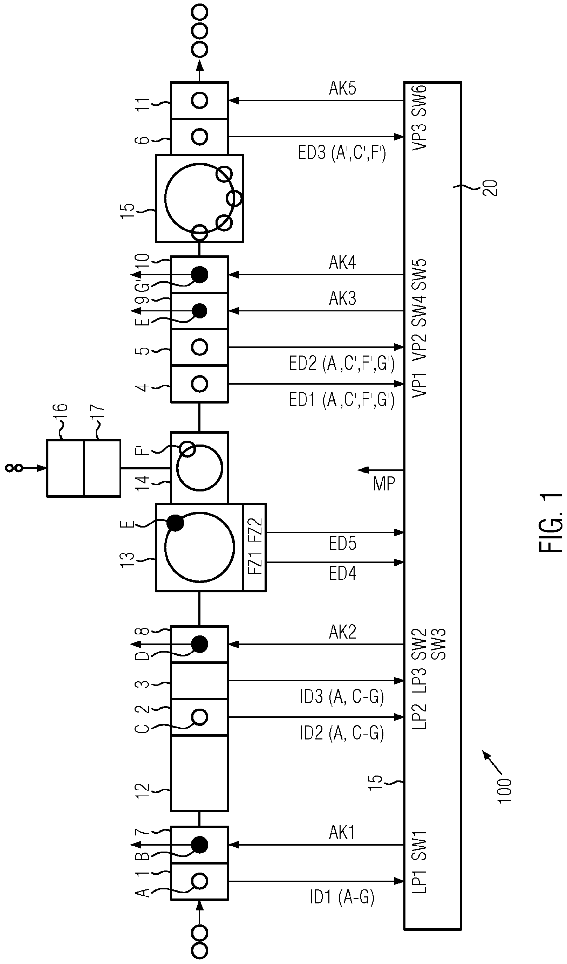

Eine bevorzugte Ausführungsform der Erfindung ist zeichnerisch dargestellt. Die Fig. 1 zeigt eine schematische Draufsicht auf eine Produktionsanlage mit zugehörigen Datenströmen.

Wie die Fig. 1 erkennen lässt, wird das erfindungsgemäße Verfahren zur Produktführung / Produktionssteuerung vorzugsweise in einer Abfüllanlage 100 für Glasflaschen durchgeführt. Die Abfüllanlage 100 umfasst demnach jeweils beispielhaft dargestellte Inspektionseinheiten 1 - 3 für Leerflaschen, Inspektionseinheiten 4 - 6 für Vollflaschen, Ausleitvorrichtungen 7 - 9 für Leerflaschen und Ausleitvorrichtungen 10, 11 für Vollflaschen. Zur beschriebenen Abfüllanlage 100 kann ferner eine Spül-/ Rinsstation 12 zum Spülen der zum Abfüllen vorgesehenen Leerflaschen gehören. In jedem Fall vorhanden ist eine Füllmaschine 13 von insbesondere umlaufender Bauart mit einer Vielzahl von (nicht dargestellten) Füllorganen zum Abfüllen eines flüssigen Produkts, insbesondere Getränks, in die Leerflaschen und eine Verschließmaschine 14 zum Verschließen der Vollflaschen mit Verschlusskappen, beispielsweise Kronkorken oder Schraubverschlüssen. Ferner kann eine Etikettiermaschine 15 zum Etikettieren ordnungsgemäß befüllter und verschlossener Vollflaschen Bestandteil der Abfüllanlage 100 sein.

Der Verschließmaschine 14 kann eine Inspektionseinheit 16 für Verschlusskappen und eine Ausleitvorrichtung 17 für als fehlerhaft erkannte Verschlusskappen vorgelagert sein.

Die Abfüllanlage 100 umfasst ferner eine Steuerung 20, die die Ausleitvorrichtungen 7 - 11 auf der Grundlage nachfolgend noch beschriebener Ausleitkriterien steuert.

Die Produktionssteuerung ist beispielhaft anhand von sieben zugeleiteten / bereitgestellten Leerflaschen A - G, und/oder daraus hergestellten Vollflaschen A', C`, F' und G' schematisch angedeutet. Schwarze Kreisfüllungen bezeichnen dabei negative Inspektionsergebnisse. Demnach werden die zwei Leerflaschen B, D aufgrund negativer Inspektionsergebnisse in wenigstens einer der stromaufwärts der Füllmaschine 13 angeordneten und diesbezüglich eingangsseitigen Inspektionseinheiten 1 - 3 vor der Füllmaschine 13 an der ersten und/oder zweiten Ausleitvorrichtung 7, 8 ausgeleitet.

Der Leerflasche E wird dagegen trotz wenigstens eines negativen Inspektionsergebnisses in den eingangsseitigen Inspektionseinheiten 1 - 3 zunächst leer durch die Füllmaschine 13 geleitet und erst nach dem Verschließen an der stromabwärts der Verschließmaschine 14 angeordneten und diesbezüglich ausgangsseitigen, dritten Ausleitvorrichtung 9 auf eine Ausleitbahn, in einen Sammelbehälter (jeweils nicht dargestellt) oder dergleichen ausgeleitet.

Die vier Leerflasche A, C, F und G (davon nicht alle in der Fig. 1 separat bezeichnet) passieren die erste, zweite und dritte Inspektionseinheit 1 - 3 mit ordnungsgemäßen Inspektionsergebnissen und werden folglich mit Produkt gefüllt und verschlossen; dies entspricht der regulären Produktion / Herstellung von Vollflaschen A', C', F' und G'.

In der ersten eingangsseitigen Inspektionseinheit 1 wird stromaufwärts der Spül-/ Rinsstation 12 ein erster Leergut-Parameter LP1 gemessen / überprüft, beispielsweise das Vorhandensein und/oder Ausmaß von an den Leerflaschen A - G durch Abnutzung verursachten Reibrändern (Scuffing).

Stromabwärts der Rinsstation 12 werden in der zweiten und dritten eingangsseitigen Inspektionseinheit 2, 3 ein zweiter und dritter Leergut-Parameter LP2, LP3 gemessen, beispielsweise das Vorhandensein einer Restlauge oder anderweitigen Flüssigkeit in den (verbliebenen) Leerflaschen A und C - G und das Ausmaß einer gegebenenfalls vorhandenen Seitenwandverschmutzung der Leerflaschen A und C - G.

Art und Anzahl eingangsseitiger Inspektionseinheiten können vom beschriebenen Beispiel abweichen und beispielsweise modular an die jeweils zu verarbeitenden Leerflaschen und/oder zur Kontrolle bestimmter stromaufwärts vorgenommener Behandlungen angepasst werden.

Die erste Inspektionseinheit 1 liefert für jede dort vermessene Leerflasche A - G wenigstens einen Messwert des ersten Leergut-Parameters LP1 in Form von ersten Initialdaten ID1. Die zweite und dritte Inspektionseinheit 2, 3 liefern entsprechend für jede dort vermessene Leerflasche A, C - G Messwerte des zweiten und dritten Leergut-Parameters LP2, LP3 in Form von zweiten und dritten Initialdaten ID2, ID3. Diese werden jeweils an die Steuerung 20 übermittelt. Die ersten Initialdaten ID1 werden allen Leerflaschen A - G zugeordnet, die zweiten und dritten Initialdaten ID2, ID3 den verbliebenen Leerflaschen A und C - G.

In der stromabwärts der Füllmaschine 13 angeordneten und diesbezüglich ausgangsseitigen vierten und fünften Inspektionseinheit 4, 5 werden die verschlossenen Vollflaschen A', C`, F', G' (davon nicht alle als Kreis dargestellt) hinsichtlich beim Abfüllen erzeugter Vollgut-Parameter VP1, VP2 untersucht, wie beispielsweise einer Füllhöhe des Produkts in den Vollflaschen A', C`, F', G' und Ordnungsmäßigkeit ihres Verschlusses.

Die vierte Inspektionseinheit 4 liefert für jede dort vermessene Vollflasche wenigstens einen Messwert des ersten Vollgut-Parameters VP1 in Form von ersten Ergebnisdaten ED1, die fünfte Inspektionseinheit 5 entsprechend wenigstens einen Messwert des zweiten Vollgut-Parameters VP2 in Form von zweiten Ergebnisdaten ED2. Diese werden jeweils an die Steuerung 20 übermittelt.

Die ersten und zweiten Ergebnisdaten ED1, ED2 werden als Vollflaschen A', C`, F', G' gefüllten Leerflaschen A, C, F, G zuordnet und somit deren Initialdaten ID1 - ID2.

Optional könnte die Leerflasche E bei/nach dem Durchleiten durch die Füllmaschine 13 unvollständig bearbeitet werden, beispielsweise nur durch Verschließen, und in der vierten und/oder fünften Inspektionseinheit 4, 5 hinsichtlich wenigstens eines der Vollgut-Parameter VP1, VP2 oder hinsichtlich eines nur für das Verschließen oder eines anderen ausgeführten Behandlungsschritts relevanten Parameters inspiziert werden. Es können dadurch beispielsweise die Ergebnisdaten ED2 für die Leerflasche E wie bei einer entsprechenden Vollflascheninspektion gewonnen werden. Diese Ergebnisdaten ED2 können dann ebenso in der Steuerung 20 gespeichert und der Leerflasche E sowie ihren abgespeicherten Initialdaten ID1 - ID3 zugeordnet werden.

In der bezogen auf die Etikettiermaschine 15 ausgangsseitigen sechsten Inspektionseinheit 6 werden die etikettierten Vollflaschen A', C', F' hinsichtlich wenigstens eines nach dem Etikettieren relevanten Vollgut-Parameters VP3 vermessen, beispielsweise auf korrekten Etikettensitz oder dergleichen. Dabei gewonnene dritte Ergebnisdaten ED3 können dann ebenso in der Steuerung 20 gespeichert und den zugrundeliegenden Leerflaschen A, C, F sowie ihren abgespeicherten Initialdaten ID1 - ID3 zugeordnet werden.

Schematisch angedeutet ist ferner, dass beispielsweise die Füllmaschine 13 und/oder die Verschließmaschine 14 und/oder die Spül-/ Rinsstation 12 und/oder die Etikettiermaschine 15 hinsichtlich des Auftretens von Maschinenfehlerzuständen FZ1, FZ2 überwacht werden kann/können, beispielsweise hinsichtlich des Auftretens eines Flaschenbruchs im Einlauf und/oder Auslauf der Füllmaschine 13 und/oder eine im Bereich der Füllmaschine 13 oder der Verschließmaschine 14 festgestellte Undichtigkeit und/oder inkorrekte Verschließkräfte /-drehmomente.

Im erweiterten Sinn kann ein Maschinenfehlerzustand ein Nichterkennen oder Nichtaussortieren von verschmutzten oder anderweitig kontaminierten Behältern sein. Beispielsweise kann eine bei der Leerflascheninspektion (beispielsweise in einer der Inspektionseinheiten 1 - 3) nicht erkannte Scherbe in einer Flasche dann noch bei nachgeordneter Vollflascheninspektion (beispielsweise in einer der Inspektionseinheiten 4 und 5) erkannt werden.

Bei Vorliegen eines Maschinenfehlerzustands FZ1, FZ2 werden zugehörige vierte bzw. fünfte Ergebnisdaten ED4, ED5 in der Steuerung 20 gespeichert und der jeweils betroffenen Leerflasche sowie seinen abgespeicherten Initialdaten ID1 - ID3 zugeordnet.

Bevorzugt werden Initialdaten, Ergebnisdaten und/oder Fehlerzustände bildgebend und/ oder sensorbasiert erfasst.

Die Steuerung 20 führt während des Produktionsbetriebs in vorgegebenen Intervallen eine Datenanalyse auf der Grundlage der für eine Vielzahl von Leerflaschen erhobenen Initialdaten ID1 - ID3 und jeweils dafür vorliegenden Ergebnisdaten ED1 - ED5 durch. Die Datenanalyse umfasst beispielsweise ein Data-Mining mit Klassifikation und/oder Regressionsanalyse und/oder Assoziationsanalyse und beruht vorzugsweise auf selbstlernenden Algorithmen im Sinne einer künstlichen Intelligenz.

Basierend auf der Datenanalyse werden Ausleitkriterien AK1 - AK5 maschinell berechnet, die festlegen, welche Initialdaten ID1 - ID3 oder welche Ergebnisdaten ED1 - ED5 ein Ausleiten von Leerflaschen / Vollflaschen an einer der Ausleitvorrichtungen 7 - 11 zur Folge haben.

Ein erstes Ausleitkriterium AK1 dient beispielsweise der Entscheidung darüber, ob eine als fehlerhaft in der ersten Inspektionseinheit 1 erkannte Leerflasche von der ersten Ausleitvorrichtung 7 aus dem Produktstrom ausgesondert werden soll. In gezeigten Beispiel ist dies für die Leerflasche B der Fall, wie durch einen Ausleitpfeil schematisch dargestellt ist. Die Leerflasche B erfüllt das erste Ausleitkriterium AK1 beispielsweise, wenn die für den Leerflasche B gemessen Initialdaten ID1 von einem in der Steuerung 20 auf der Grundlage der Datenanalyse berechneten Sollwert SW1 des zugehörigen Leergut-Parameters LP1 in unzulässiger Weise abweichen.

Nach Ausleiten der Leerflasche B an der ersten Ausleitvorrichtung 7, ausgelöst vom ersten Ausleitkriterium AK1, können für diese Leerflasche B weder weitere Initialdaten ID2, ID3 noch Ergebnisdaten ED1 - ED5 erhoben werden.

Im Sinne einer möglichst umfassenden Optimierung des Produktionsablaufs ist es jedoch wünschenswert, gegebenenfalls auch für kosmetisch fehlerhafte Leerflaschen zusätzliche Initialdaten ID2, ID3 und/oder Ergebnisdaten ED1 - ED5 zu gewinnen, um Korrelationen zwischen Initialdaten ID2, ID3 und/oder Ergebnisdaten ED1 - ED5 herzustellen und/oder zu präzisieren und/oder zu gewichten. Auf dieser Grundlage können dann die Datenanalyse und mit ihr die Ausleitkriterien AK1 - AK5 dynamisch optimiert werden.

Zur Vermeidung von Keimverschleppung ist jedoch sicherzustellen, dass keine kontaminierten Leerflaschen die Füllmaschine 13 erreichen. Auch sind Beschädigungen der Abfüllanlage 100, Produktionsunterbrechungen und Produktverluste möglichst umfassend zu vermeiden. Folglich werden die Ausleitkriterien AK1 - AK5 laufend optimiert, um sowohl den Anforderungen an eine aussagekräftige Datenanalyse als auch den Anforderungen an einen wirtschaftlichen und reibungslosen Produktionsablauf sowie der angestrebten Produktqualität zu genügen.

Unter dieser Prämisse werden möglichst viele Leerflaschen an der ersten Ausleitvorrichtung 7 nicht ausgeleitet, sondern, wie im Falle der Leerflasche A und C - G, der Spül-/ Rinsstation 12 zugeführt und dort für das anschließende Abfüllen gereinigt / gespült. Danach werden die Leerflasche A und C - G in der zweiten und dritten Inspektionseinheit 2, 3 inspiziert und deren so gewonnene Initialdaten ID2 und ID3 an die Steuerung 20 übermittelt.

Für jede der derart inspizierten Leerflaschen A, C - G wird geprüft, ob ein zuvor in der Steuerung 20 auf Grundlage der Datenanalyse berechnetes zweites Ausleitkriterium AK2 erfüllt ist. Dieses ist beispielsweise erfüllt, wenn wenigstens die zweiten Initialdaten ID2 oder die dritten Initialdaten ID3 einer bestimmten Leerflasche A, C - G in unzulässiger Weise von einem Sollwert SW2, SW3 des jeweils zugehörigen Leergut-Parameters LP2, LP3 abweicht. Im gezeigten Beispiel ist dies für die Leerflasche D der Fall. Diese wird daher von der zweiten Ausleitvorrichtung 8 aus dem Produktstrom ausgesondert.

Hierbei kann jedes Ausleitkriterium AK1 - AK5 nahezu beliebig auf der Grundlage der zuvor erhobenen Initialdaten ID1 - ID3 und der individuell zugeordneten Ergebnisdaten ED1 - ED5 berechnet werden. Beispielsweise falls sich herausgestellt hat, dass eine bestimmte Konstellation von Initialdaten ID1 - ID3 mit für die Produktqualität negativen und/oder für den Produktionsablauf schädlichen Ergebnisdaten ED1 - ED5 korreliert.

Das erste und/oder zweite Ausleitkriterium AK1, AK2 würde bei einer derart negativen Prognose für eine bestimmte Leerflasche dessen Weiterleiten zur Rinsstation 12, Füllmaschine 13 und Verschließmaschine 14 und/oder Etikettiermaschine 15 unterbinden, indem die betroffene Leerflasche an der ersten oder zweiten Ausleitvorrichtung 7, 8 ausgeleitet wird. Entsprechend können Ausleitkriterien AK1 - AK5 auch gelockert werden, falls dies aus einer aktualisierten Datenanalyse geschlossen wird.

Die Initialdaten ID1 - ID3 der Leerflaschen A und C - G erfüllen das zweite Ausleitkriterium AK2 nicht, sodass sie der Füllmaschine 13 zugeführt werden. Im Bereich der Füllmaschine 13 ist schematisch angedeutet, dass eine zuvor nicht ausgeleitete Leerflasche E aufgrund seiner Initialdaten ID1 - ID3 zwar nicht das zweite Ausleitkriterium AK2 erfüllt, jedoch ein drittes Ausleitkriterium AK3, wodurch die Leerflasche E stromabwärts der Füllmaschine 13 und Verschließmaschine 14 an der dritten Ausleitvorrichtung 9 aus dem Produktstrom ausgesondert wird. Die Leerflasche E kann also entweder vor der Füllmaschine 13 ausgeleitet werden oder leer durch die Füllmaschine 13 geschleust, in der Verschließmaschine 14 verschlossen und nach Inspektion des erzeugten Verschlusses ausgesondert werden. Auch andere Inspektionen wären an der vierten und/oder fünften Inspektionseinheit 4, 5 denkbar. Dadurch ließen sich im Rahmen der Datenanalyse verwertbare erste und/oder zweite Ergebnisdaten ED1, ED2 für die gegebenenfalls verschlossene Leerflasche E gewinnen. Die nicht oder teilweise behandelte Leerflasche E könnte auch zur Gewinnung weitere Ergebnisdaten ED3 der Etikettiermaschine 15 und der nachgelagerten Inspektionseinheit 6 zugeführt werden.

Alle Leerflaschen, deren Initialdaten ID1 ID3 weder das erste noch das zweite Ausleitkriterium AK1, AK2 erfüllen, hier die Leerflaschen A, C, F und G, werden in der Füllmaschine 13 zu Vollflaschen verarbeitet, in der Verschließmaschine 14 verschlossen und in der vierten und fünften Inspektionseinheit 4, 5 inspiziert. Die dabei gewonnenen ersten und zweiten Ergebnisdaten ED1, ED2 werden den zugrundeliegenden Leerflaschen A, C, F und G zugeordnet und können in der Datenanalyse sowohl untereinander als auch mit den zugeordneten Initialdaten ID1 - ID3 der Leerflasche A, C, F und G korreliert werden.

Ist für die derart untersuchten Vollflaschen ein viertes Ausleitkriterium AK4 erfüllt, beispielsweise da die ersten Ergebnisdaten ID1 und/oder zweiten Ergebnisdaten ED2 in unzulässiger Weise von einem vierten bzw. fünften Sollwert SW4, SW5 des jeweils zugehörigen Vollgut-Parameters VP1, VP2 abweichen, so werden betroffene Vollflaschen, in Beispiel die Vollflasche G', an der vierten Ausleitvorrichtung 10 aus dem Produktstrom ausgesondert.

Ordnungsgemäß gefüllte und verschlossene Vollflaschen A', C' und F' werden der Etikettiermaschine 15 zugeführt und dort mit einem Etikett ausgestattet und/oder gegebenenfalls direkt bedruckt. Danach werden die etikettierten / bedruckten Vollflaschen A', C', F' beispielsweise in einer fünften Inspektionseinheit 6 geprüft. Dabei gewonnene dritte Ergebnisdaten ED3 werden ebenso an die Steuerung 20 übermittelt.

Der Vollständigkeit halber ist ferner eine stromabwärts der Etikettiermaschine 15 angeordnete fünfte Ausleitvorrichtung 11 schematisch angedeutet. Diese leitet fehlerhaft etikettierte / bedruckte Vollflaschen (oder gegebenenfalls auch teilbehandelte Leerflaschen) aus, für die ein fünftes Ausleitkriterium AK5 erfüllt ist, beispielsweise basierend auf einem Vergleich der dritten Ergebnisdaten ED3 mit einem sechsten Sollwert SW6 des zugehörigen dritten Vollgut-Parameters VP3.

Die laufend überwachten Maschinenfehlerzustände FZ1, FZ2 werden optional ebenso unter Zuordnung zur betroffenen bzw. zugrundeliegenden Leerflasche an die Steuerung 20 übermittelt, um diese im Sinne von vierten und fünften Ergebnisdaten ED4, ED5 in der Datenanalyse zu berücksichtigen. Sämtliche Ergebnisdaten ED1 - ED5 lassen sich so mit einzelnen oder Gruppen von Initialdaten ID1 - ID3 individuell für einzelne Leerflasche und/oder für Gruppen von Leerflaschen miteinander korrelieren.

Im laufenden Produktionsbetrieb werden die Initialdaten ID1 - ID3 und die Ergebnisdaten ED1 - ED5, soweit sie für die einzelnen Leerflaschen und Vollflaschen verfügbar sind, einander zugeordnet und angehäuft. Durch die Datenanalyse beispielsweise im Sinne eines Data-Mining, können Korrelationen zwischen einzelnen Leergut-Parametern LP1 - LP3, Vollgut-Parametern VP1 - VP3 und/oder Maschinenfehlerzuständen FZ1, FZ2 berechnet und durch Zugewinn von Initialdaten und Ergebnisdaten im Produktionsbetrieb laufend aktualisiert und gegebenenfalls präzisiert werden.

Auf dieser Grundlage können einzelne, im Produktionsbetrieb nachfolgend geltende Ausleitkriterien AK1 - AK5 laufend neu berechnet werden, um einzelne Leerflaschen gezielt so auszuleiten, dass Produktionsunterbrechungen und/oder Beschädigungen vermieden werden können und gleichzeitig möglichst viel Information über Korrelationen zwischen Initialdaten und Ergebnisdaten hergestellt werden können.

Hierbei können einzelne Leergut-Parameter LP1 - LP3 bzw. die diesen zugeordneten Initialdaten ID1 - ID3 je nach Auswirkung auf Ergebnisdaten ED1 - ED5 gewichtet verarbeitet werden. Eine derartige Gewichtung von Parametern und/oder Parametersätzen kann zudem im laufenden Produktionsbetrieb im Sinne einer Selbstoptimierung der Abfüllanlage 100 ständig angepasst werden, um möglichst viele und qualitativ hochwertige Vollflaschen aus den Leerflaschen zu erzeugen und/oder die Aussagekraft der Datenanalyse zu verbessern.

Für die Verarbeitung der Initialdaten ID1 - ID3 und der Ergebnisdaten ED1 - ED5 sind prinzipiell beliebige Algorithmen in der Steuerung 20 anwendbar. Insbesondere auch solche, die im Sinne einer künstlichen Intelligenz eine maschineninterne Optimierung und/oder ein maschineninternes Lernen ermöglichen. Derartige Algorithmen sind prinzipiell bekannt.

Entscheidend ist, dass die Ausleitkriterien AK1 - AK5 dynamisch in Abhängigkeit der sich anhäufenden und/oder aktualisierten Datenmenge mit einander zugeordneten Initialdaten der Leerflasche und Ergebnisdaten der daraus hergestellten Vollflaschen angepasst werden können.

In die oben beschriebene Datenanalyse und Steuerung können auch die der Verschließmaschine 14 vorgelagerte Inspektionseinheit 16 für Verschlusskappen und die Ausleitvorrichtung 17 für als fehlerhaft erkannte Verschlusskappen einbezogen werden. Beispielsweise kann die Inspektionseinheit 16 für jede dort vermessene Verschlusskappe wenigstens einen Messwert eines weiteren Leergut-Parameters in Form von weiteren Initialdaten liefern. Ebenso kann für die Ausleitvorrichtung 17 ein separates Ausleitkriterium berechnet und prinzipiell auf die gleiche Weise für Verschlusskappen angewendet werden, wie dies oben für die Ausleitvorrichtungen 7 - 11 beschrieben wurde.

Separat dargestellte Ausleitvorrichtungen, wie beispielsweise die Ausleitvorrichtungen 9, 10 stromabwärts der Verschließmaschine 14 können auch miteinander kombiniert werden. Das heißt, es können unterschiedliche Ausleitkriterien für eine bestimmte Ausleitvorrichtung berechnet werden. Beispielsweise könnte das dritte Ausleitkriterium AK3 dazu verwendet werden, teilbehandelte Leerflaschen auf eine bestimmte Ausleitspur auszusondern, das vierte Ausleitkriterium dazu, fehlerhafte Vollflaschen auf eine andere Ausleitspur auszusondern. Dies ist prinzipiell in einer einzigen oder in mehreren Ausleitvorrichtungen möglich. Maschinenparameter MP, beispielsweise der Rins-/ Spülstation 12, der Füllmaschine 13, der Verschließmaschine 14 und/oder der Etikettiermaschine 15 können auf der Grundlage der hinzugewonnenen Initialdaten ID1 - ID3 und Ergebnisdaten ED1 - ED5 zur Optimierung der Produktqualität laufend angepasst werden.

Die hinzugewonnenen Initialdaten ID1 - ID3 und Ergebnisdaten ED1 - ED5 können in den Produktionsbetrieb sowohl durch manuell ausgelöste als auch durch automatische Aktualisierung von Ausleitkriterien AK1 - AK5 und/oder Maschinenparametern MP einfließen.

Die beschriebene Erfindung ermöglicht somit gleichzeitig die Minimierung von Maschinenfehlerzuständen und die Qualitätsoptimierung beim Abfüllen und Füllen von Vollflaschen im laufenden Betrieb.

## Patentansprüche

1. Verfahren zur Produktführung in einer Abfüllanlage (100),
wobei man Leergut-Parameter (LP1 - LP3) zum Abfüllen bereitgestellter Leerflaschen (A - G) aus Glas automatisch misst und dabei Initialdaten (ID1 - ID3) zum Abfüllen eines flüssigen Produkts in die Leerflaschen gewinnt und abspeichert,
wobei man Vollgut-Parameter (VP1 - VP3) beim Abfüllen hergestellter Vollflaschen (A', C` , F`, G') misst, man insbesondere beim Abfüllen auftretende Maschinenfehlerzustände (FZ1, FZ2) automatisch feststellt, und man dabei jeweils gewonnene Ergebnisdaten (ED1 - ED5) des Abfüllens den Leerflaschen individuell zuordnet und abspeichert, wobei man wenigstens ein im Produktionsbetrieb nachfolgend geltendes Ausleitkriterium (AK1 - AK5) zur Entscheidung über ein Ausleiten fehlerhafter Leerflaschen oder Vollflaschen auf der Grundlage einer Datenanalyse der gespeicherten Initialdaten und Ergebnisdaten berechnet,
und wobei die Berechnung des Ausleitkriteriums unter Berücksichtigung im Produktionsbetrieb hinzugewonnener Initialdaten und Ergebnisdaten aktualisiert wird.

2. Verfahren nach Anspruch 1, wobei die hinzugewonnenen Initialdaten (ID1 - ID3) und Ergebnisdaten (ED1 - ED5) in den Produktionsbetrieb manuell und/oder automatisch aktualisiert übernommen werden.

3. Verfahren nach Anspruch 1 oder 2, wobei Maschinenparameter (MP), insbesondere einer vorgelagerten Rinsstation (12) zum Spülen der Leerflasche (A - G), einer Füllmaschine (13) zum Herstellen der Vollflaschen (A', C`, F', G') und/oder einer Verschließmaschine (14) zum Verschließen der Vollflaschen, zur Optimierung der erzielten Produktqualität angepasst werden.

4. Verfahren nach einem der vorigen Ansprüche, wobei das Ausleitkriterium (AK1 - AK5) derart automatisch optimiert wird, dass eine mittels der Datenanalyse prognostizierte anteilige Häufigkeit zulässiger Werte der Vollgut-Parameter (VP1 - VP3) steigt und optional ferner die prognostizierte anteilige Häufigkeit von Maschinenfehlerzuständen (FZ1, FZ2) sinkt.

5. Verfahren nach wenigstens einem der vorigen Ansprüche, wobei die Datenanalyse ein Data-Mining umfasst, insbesondere eine Assoziationsanalyse und/oder eine Regressionsanalyse und/oder eine Datenklassifikation.

6. Verfahren nach wenigstens einem der vorigen Ansprüche, wobei ein Erfüllen des Ausleitkriteriums (AK1 - AK5) auslöst: ein Ausleiten der zugeordneten Leerflasche (A - G) vor einem dafür vorgesehenen Füllorgan; ein Durchleiten der Leerflasche am Füllorgan ohne Abfüllen, jedoch mit Verschließen und Ausleiten der Leerflasche; oder Herstellen und Ausleiten einer verschlossenen Vollflasche.

7. Verfahren nach wenigstens einem der vorigen Ansprüche, wobei Sollbereiche (SW1 - SW3) der Leergut-Parameter (LP1 - LP3) auf der Grundlage der Datenanalyse festgelegt werden, und wobei das Ausleitkriterium (AK1 - AK3) vorgibt, welche und/oder in welchem Ausmaß Initialdaten (ID1 - ID3) einer geprüften Leerflasche (A - G) von den jeweiligen Sollbereichen abweichen dürfen.

8. Verfahren nach einem der vorigen Ansprüche, wobei die Sollbereiche (SW1 - SW6) und/oder das Ausleitkriterium (AK1 - AK5) auf der Grundlage fortschreitender Anhäufung hinzugewonnener Initialdaten (ID1 - ID3) und Ergebnisdaten (ED1 - ED3) aktualisiert wird/werden.

9. Verfahren nach wenigstens einem der vorigen Ansprüche, wobei man bei der Datenanalyse mehrere Parametersätze berücksichtigt, die jeweils assoziierte Leergut-Parameter (LP1 - LP3) und Vollgut-Parameter (VP1 - VP3) umfassen, und wobei Abweichungen gemessener Leergut-Parameter von ihren Sollbereichen (SW1 - SW3) gewichtet, insbesondere auf der Grundlage hinzugewonnener Initialdaten (ID1 - ID3) und Ergebnisdaten (ED1 - ED3) dynamisch gewichtet, in die Festlegung des Ausleitkriteriums (AK1 - AK5) eingehen.

10. Verfahren nach wenigstens einem der vorigen Ansprüche, wobei die Leergut-Parameter (LP1 - LP3) wenigstens drei, insbesondere wenigstens fünf, der folgenden Eigenschaften / Zustände der jeweiligen Leerflasche (A - G) angeben: korrekter Flaschentyp, Ausmaß von Reibrändern, Verschmutzung und/oder Beschädigung der Seitenwand; Verschmutzung, Rostablagerungen und/oder Beschädigung seitlicher Mündungsbereiche / Verschlussgewinde; Verschmutzung und/oder Beschädigung von Dichtflächen; Verschmutzung und/oder Beschädigung von Bodenbereichen; und/oder Reste von Lauge oder anderweitiger Flüssigkeit im Inneren vorhanden.

11. Verfahren nach wenigstens einem der vorigen Ansprüche, wobei wenigstens einige der Leergut-Parameter (LP1 - LP3) bildgebend vor und/oder im Einlaufbereich einer Füllmaschine (13) erfasst werden, insbesondere vor, nach einer Rinsstation (12) zum Spülen der Leerflasche (A - G).

12. Verfahren nach wenigstens einem der vorigen Ansprüche, wobei die Vollgut-Parameter (VP1 - VP3) wenigstens zwei der folgenden Eigenschaften / Zustände der Vollflaschen (A', C`, F', G') angeben: eine Füllhöhe des abgefüllten Produkts; Fehlen, Beschädigung oder fehlerhafter Sitz eines angebrachten Verschlusses; Dichtigkeit des Verschlusses.

13. Verfahren nach wenigstens einem der vorigen Ansprüche, wobei die Maschinenfehlerzustände (FZ1, FZ2) umfassen: Flaschenbruch vor dem zugeordneten Füllorgan; Flaschenbruch nach dem zugeordneten Füllorgan; unzureichende Evakuierung der Leerflasche am Füllorgan; und Kraft / Drehmoment beim Anbringen des zugeordneten Verschlusses fehlerhaft.

14. Abfüllanlage (100) mit einer Füllmaschine (13) für Leerflaschen aus Glas und einer zugeordneten Verschließmaschine (14) für daraus hergestellte Vollflaschen (A', C`, F`, G') und ferner umfassend: wenigstens eine stromaufwärts der Füllmaschine angeordnete Ausleitvorrichtung (7, 8) für Leerflaschen (A - G); wenigstens eine stromabwärts der Verschließmaschine angeordneten Ausleitvorrichtung (9 - 11) für Vollflaschen und/oder verschlossene Leerflaschen; Inspektionseinheiten (1 - 6) für die Leerflaschen und die Vollflaschen zum Erheben von Initialdaten (ID1 - ID3) und Ergebnisdaten (ED1 - ED3) mit dem Verfahren nach wenigstens einem der vorigen Ansprüche; und eine Steuerung (20) zum Auslösen der Ausleitvorrichtungen (7 - 11) auf der Grundlage wenigstens eines mit dem Verfahren nach wenigstens einem der vorigen Ansprüche berechneten Ausleitkriteriums (AK1 - AK5).

## Claims

1. Method for product guidance in a filling system (100),
where empties parameters (LP1 - LP3) for filling empty glass bottles (A - G) provided are measured in an automated manner and initial data (ID1 - ID3) for filling a liquid product into said empty bottles is acquired and stored,
where fulls parameters (VP1 - VP3) are measured when filled bottles (A', C', F', G'), produced are filled, machine error states (FZ1, FZ2) that occur during the filling process are detected in an automated manner, and respectively acquired results data (ED1 - ED5) of the filling process are individually associated with said empty bottles and stored, where at least one lead-out criterion (AK1 - AK5) applicable in the downstream production operation is calculated for deciding whether or not to lead out faulty empty bottles or filled bottles based on a data analysis of said initial data and results data stored, and where the calculation of said lead-out criterion is updated taking into consideration initial data and results data acquired during production.

2. Method according to claim 1, where said initial data and said results data (ED1 - ED5) acquired are incorporated into the production operation updated in a manual and/or automated manner.

3. Method according to claim 1 or 2, where machine parameters (MP), in particular of an upstream rinsing station (12) for rinsing said empty bottle (A - G), of a filling machine (13) for producing said filled bottles (A', C', F', G'), and/or a closing machine (14) for closing said filled bottles are adapted to optimize the product quality obtained.

4. Method according to one of the preceding claims, where said lead-out criterion (AK1-AK5) is optimized in an automated manner in such a way that a proportionate frequency of permissible values of said fulls parameters (VP1-VP3) predicted by way of said data analysis increases and, optionally, furthermore the predicted proportionate frequency of machine error states (FZ1, FZ2) decreases.

5. Method according to at least one of the preceding claims, where said data analysis comprises data mining, in particular an association analysis, and/or a regression analysis, and/or a data classification.

6. Method according to at least one of the preceding claims, where fulfilling said lead-out criterion (AK1-AK5) triggers: leading said associated empty bottle (A-G) out upstream of a filling element provided for this purpose; passing said empty bottle through said filling element without filling it, but closing it and leading said empty bottle out; or producing and leading out a closed filled bottle.

7. Method according to at least one of the preceding claims, where target ranges (SW1 - SW3) of said empties parameters (LP1 - LP3) are defined on the basis of said data analysis, and where said lead-out criterion (AK1 - AK3) specifies which and/or to which extent initial data (ID1 - ID3) of an empty bottle (A - G) examined may deviate from said respective target ranges.

8. Method according to one of the preceding claims, where said target ranges (SW1 - SW6) and/or said lead-out criterion (AK1 - AK5) is/are updated on the basis of a progressive accumulation of initial data (ID1 - ID3) and results data (ED1 - ED3) acquired.

9. Method according to at least one of the preceding claims, where several sets of parameters are taken into consideration in the data analysis, each of which comprises associated empties parameters (LP1 - LP3) and fulls parameters (VP1 - VP3), and where deviations of measured empties parameters from their target ranges (SW1 - SW3) are included in a weighted manner, in particular weighted dynamically on the basis of initial data (ID1 - ID3) and results data (ED1 - ED3) acquired, in defining said lead-out criterion (AK1 - AK5).

10. Method according to at least one of the preceding claims, where said empties parameters (LP1 - LP3) indicate at least three, in particular at least five, of the following properties and/or states of said respective empty bottle (A - G): correct type of bottle, extent of scuffing, fouling of and/or damage to the side wall; fouling of, rust deposits, and/or damage to the side mouth regions/closure threads; fouling of and/or damage to sealing surfaces; fouling of and/or damage to base regions; and/or the presence of lye residues or other liquid in the interior.

11. Method according to at least one of the preceding claims, where at least some of said empties parameters (LP1 - LP3) are detected by imaging upstream of and/or in said inlet region of a filling machine (13), in particular upstream, downstream of a rinsing station (12) for rinsing said empty bottle (A - G).

12. Method according to at least one of the preceding claims, where said fulls parameters (VP1-VP3) indicate at least two of the following properties/states of said filled bottles (A`, C`, F`, G'): a filling level of said filled product; absence, damage to, or improper fit of an attached closure; tightness of the closure.

13. Method according to at least one of the preceding claims, where said machine error states (FZ1, FZ2) comprise: bottle fracture at said associated filling element; bottle fracture downstream of said associated filling element; insufficient evacuation of said empty bottle at said filling element; and/or force/torque incorrect when applying the associated closure.

14. Filling system (100) with a filling machine (13) for empty glass bottles and an associated closing machine (14) for filled bottles (A', C', F', G') produced therefrom and further comprising: at least one lead-out device (7, 8) for empty bottles (A - G) arranged upstream of said filling machine; at least one lead-out device (9-11) for filled bottles and/or closed empty bottles arranged downstream of said closing machine; inspection units (1-6) for said empty bottles and said filled bottles for collecting initial data (ID1-ID3) and results data (ED1-ED3) using the method according to at least one of the preceding claims; and a control device (20) for triggering said lead-out devices (7-11) on the basis of at least one lead-out criterion (AK1-AK5) calculated using the method according to at least one of the preceding claims.

## Revendications

1. Procédé de guidage de produit dans une installation de remplissage (100),
dans lequel des paramètres de produit vide (LP1 à LP3) permettant de remplir des bouteilles vides (A à G) en verre fournies sont mesurés de manière automatique, et des données initiales (ID1 à ID3) permettant de remplir les bouteilles vides avec un produit liquide sont alors obtenues et stockées,
dans lequel des paramètres de produit plein (VP1 à VP3) sont mesurés lors du remplissage de bouteilles pleines (A', C', F', G') produites, des états d'erreur de machine (FZ1, FZ2) survenant lors du remplissage sont en particulier constatés de manière automatique, et des données de résultat (ED1 à ED5) du remplissage respectivement obtenues sont alors individuellement associées aux bouteilles vides, puis enregistrées, dans lequel au moins un critère de rejet (AK1 à AK5) approprié pour la suite de l'activité de production est calculé afin de décider du rejet de bouteilles vides ou de bouteilles pleines défectueuses en se basant sur une analyse de données des données initiales et des données de résultat stockées,
et dans lequel le calcul du critère de rejet est mis à jour en tenant compte des données initiales et des données de résultat obtenues au cours de l'activité de production.

2. Procédé selon la revendication 1, dans lequel les données initiales (ID1 à ID3) et les données de résultat (ED1 à ED5) obtenues sont appliquées à l'activité de production en étant mises à jour de manière manuelle et/ou automatique.

3. Procédé selon la revendication 1 ou 2, dans lequel des paramètres de machine (MP), en particulier d'une station de rinçage (12) située en amont et permettant de rincer les bouteilles vides (A à G), d'une machine de remplissage (13) permettant de produire les bouteilles pleines (A', C', F', G') et/ou d'une machine de fermeture (14) permettant de fermer les bouteilles pleines, sont ajustés afin d'optimiser la qualité de produit recherchée.

4. Procédé selon l'une quelconque des revendications précédentes, dans lequel le critère de rejet (AK1 à AK5) est optimisé de manière automatique de telle manière qu'une fréquence proportionnelle, prédite au moyen de l'analyse de données, des valeurs autorisées des paramètres de produit plein (VP1 à VP3) augmente et, éventuellement et de manière supplémentaire, la fréquence proportionnelle prédite des états d'erreur de machine (FZ1, FZ2) diminue.

5. Procédé selon au moins l'une quelconque des revendications précédentes, dans lequel l'analyse de données comprend une exploration de données, en particulier une analyse d'association et/ou une analyse de régression et/ou une classification de données.

6. Procédé selon au moins l'une quelconque des revendications précédentes, dans lequel le fait de satisfaire au critère de rejet (AK1 à AK5) déclenche : le rejet de la bouteille vide (A à G) associée en amont d'un organe de remplissage prévu à cet effet ; le passage de la bouteille vide au niveau de l'organe de remplissage, sans remplissage mais avec fermeture, et le rejet de la bouteille vide ; ou la production et le rejet d'une bouteille pleine fermée.

7. Procédé selon au moins l'une quelconque des revendications précédentes, dans lequel des plages de consigne (SW1 à SW3) des paramètres de produit vide (LP1 à LP3) sont définies en se basant sur l'analyse de données, et dans lequel le critère de rejet (AK1 à AK3) spécifie quelles données initiales (ID1 à ID3) d'une bouteille vide (A à G) testée peuvent différer, et/ou dans quelle mesure elles peuvent différer, des plages de consigne respectives.

8. Procédé selon l'une quelconque des revendications précédentes, dans lequel les plages de consigne (SW1 à SW6) et/ou le critère de rejet (AK1 à AK5) est/sont mis(es) à jour en se basant sur l'accumulation progressive de données initiales (ID1 à ID3) et de données de résultat (ED1 à ED3) obtenues.

9. Procédé selon au moins l'une quelconque des revendications précédentes, dans lequel plusieurs ensembles de paramètres comprenant respectivement des paramètres de produit vide (LP1 à LP3) et des paramètres de produit plein (VP1 à VP3) associés sont pris en compte lors de l'analyse de données, et dans lequel les écarts entre les paramètres de produit vide mesurés et leurs plages de consigne (SW1 à SW3) participent, en étant pondérés, à la détermination du critère de rejet (AK1 à AK5), en particulier en étant pondérés de manière dynamique en se basant sur des données initiales (ID1 à ID3) et des données de résultat (ED1 à ED3).

10. Procédé selon au moins l'une quelconque des revendications précédentes, dans lequel les paramètres de produit vide (LP1 à LP3) indiquent au moins trois, en particulier au moins cinq, des propriétés/états ci-dessous de la bouteille vide (A à G) respective : type correct de bouteille, dimension des bords de friction, encrassement et/ou endommagement de la paroi latérale ; encrassement, dépôts de rouille et/ou endommagement des régions d'embouchure latérales/du filetage de fermeture ; encrassement et/ou endommagement des surfaces d'étanchéité ; encrassement et/ou endommagement des régions de fond ; et/ou résidus de lessive ou d'autres liquides présents à l'intérieur.

11. Procédé selon au moins l'une quelconque des revendications précédentes, dans lequel au moins certains des paramètres de produit vide (LP1 à LP3) sont détectés par imagerie en amont de et/ou dans la région d'entrée d'une machine de remplissage (13), en particulier en amont, après une station de rinçage (12) permettant de rincer la bouteille vide (A à G).

12. Procédé selon au moins l'une quelconque des revendications précédentes, dans lequel les paramètres de produit plein (VP1 à VP3) indiquent au moins deux des propriétés/états ci-dessous des bouteilles pleines (A', C', F', G') : hauteur de remplissage du produit rempli ; absence, endommagement ou ajustement incorrect du dispositif de fermeture mis en place ; étanchéité du dispositif de fermeture.

13. Procédé selon au moins l'une quelconque des revendications précédentes, dans lequel les états d'erreur de machine (FZ1, FZ2) comprennent : bris de bouteille avant l'organe de remplissage associé ; bris de bouteille après l'organe de remplissage associé ; évacuation insuffisante des bouteilles vides au niveau de l'organe de remplissage ; et force/couple défectueux lors de la mise en place du dispositif de fermeture associé.

14. Installation de remplissage (100) comprenant une machine de remplissage (13) destinée à des bouteilles vides en verre et une machine de fermeture (14) associée destinée aux bouteilles pleines (A', C', F', G') produites, et comprenant en outre : au moins un dispositif de rejet (7, 8) destiné aux bouteilles vides (A à G) et agencé en amont de la machine de remplissage ; au moins un dispositif de rejet (9 à 11) destiné aux bouteilles pleines et/ou aux bouteilles vides fermées et agencé en aval de la machine de fermeture ; des unités d'inspection (1 à 6) destinées aux bouteilles vides et aux bouteilles pleines afin de collecter des données initiales (ID1 à ID3) et des données de résultat (ED1 à ED3) grâce au procédé selon au moins l'une quelconque des revendications précédentes ; et une commande (20) permettant de déclencher les dispositifs de rejet (7 à 11) en se basant sur au moins un critère de rejet (AK1 à 5 AK) calculé grâce au procédé selon au moins l'une quelconque des revendications précédentes.
